(19) **Europäisches Patentamt / European Patent Office / Office européen des brevets**

(11) **EP 1 592 909 B1**

(12) **EUROPÄISCHE PATENTSCHRIFT**

(45) Veröffentlichungstag und Bekanntmachung des Hinweises auf die Patenterteilung:
**05.10.2011 Patentblatt 2011/40**

(51) Int Cl.:
**F16L 11/12** *(2006.01)* **E04H 15/20** *(2006.01)*

(21) Anmeldenummer: **04701567.2**

(22) Anmeldetag: **13.01.2004**

(86) Internationale Anmeldenummer:
**PCT/CH2004/000007**

(87) Internationale Veröffentlichungsnummer:
**WO 2004/072532 (26.08.2004 Gazette 2004/35)**

(54) **PNEUMATISCHES BAUELEMENT**

PNEUMATIC COMPONENT

ELEMENT PNEUMATIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **14.02.2003 CH 224032003**

(43) Veröffentlichungstag der Anmeldung:
**09.11.2005 Patentblatt 2005/45**

(73) Patentinhaber: **Prospective Concepts AG 8152 Glattbrugg (CH)**

(72) Erfinder:
 • **PEDRETTI, Mauro CH-6710 Biasca (CH)**

 • **REINHARD, Andreas CH-8001 Zürich (CH)**

(74) Vertreter: **Stump, Beat et al Stump & Partner AG Patentanwälte AG Dufourstrasse 116 8008 Zürich (CH)**

(56) Entgegenhaltungen:
**WO-A-01/73245    US-A- 5 421 128 US-A- 5 677 023**

## Beschreibung

Die vorliegende Erfindung betrifft ein pneumatisches Bauelement nach dem Oberbegriff des Patentanspruches 1. Ein in den Grundstrukturen ähnliches Bauelement ist bekannt aus WO 01/73245. Ähnlich bedeutet in diesem Zusammenhang, dass das bekannte pneumatische Bauelement aufgebaut ist aus drei Grundbausteinen, nämlich einem im Wesentlichen rohrförmigen mit Druckgas zu beaufschlagenden Körper, einem auf seiner Lastseite - meistens oben - angeordneten Druckstab und mindestens zwei Zugbändern, welche im gegenläufigen Schraubungssinne und den rohrförmigen Körper herum gelegt und gespannt werden, wobei sie an den Enden des Druckstabes befestigt sind und einander auf einer dem Druckstab gegenüberliegenden Mantellinie des rohrförmigen Körpers kreuzen.

Die genannte Anmeldung beruht auf der Verwendung von grundsätzlich flexiblen Materialien für den mit Druckgas beaufschlagten Hohlkörper. Die Vorteile dieser bekannten Lösung gehen einher mit einem nicht zu vernachlässigenden Aufwand an Justier- und Abstimmungsarbeiten an den genannten Bauelementen, welcher vor Ort auf dem Bauplatz zu leisten ist.

Die Aufgabe der vorliegenden Erfindung ist einerseits die Erhöhung der Fertigungsgenauigkeit, anderseits die Möglichkeit das erfindungsgemässe pneumatische Bauelement montagefertig auf den Bauplatz anzuliefern, verbunden mit einem Minimum an Justierarbeit.

Die Lösung der gestellten Aufgabe ist wiedergegeben im kennzeichnenden Teil des Patentanspruches 1 hinsichtlich der wesentlichsten Merkmale in den weiteren Patentansprüchen hinsichtlich weiterer vorteilhafter Ausbildungen.

Anhand der beigefügten Zeichnung ist der Erfindungsgedanke näher erläutert. Es zeigen

Fig. 1     eine Seitenansicht eines ersten Ausführungsbeispiels der Erfindung,

Fig. 2     einen Schnitt durch das Ausführungsbeispiel von Fig. 2,

Fig. 3     einen Schnitt durch eine Variante des ersten Ausführungsbeispiels,

Fig. 4     eine Seitenansicht eines zweiten Ausführungsbeispiels ausgeführt als Modul,

Fig. 5     eine Seitenansicht eines ersten modularen Aufbaus,

Fig. 6     eine Seitenansicht eines zweiten modularen Aufbaus,

Fig. 7     einen Längsschnitt durch die Verbindung von zwei Modulen gemäss Fig. 5,

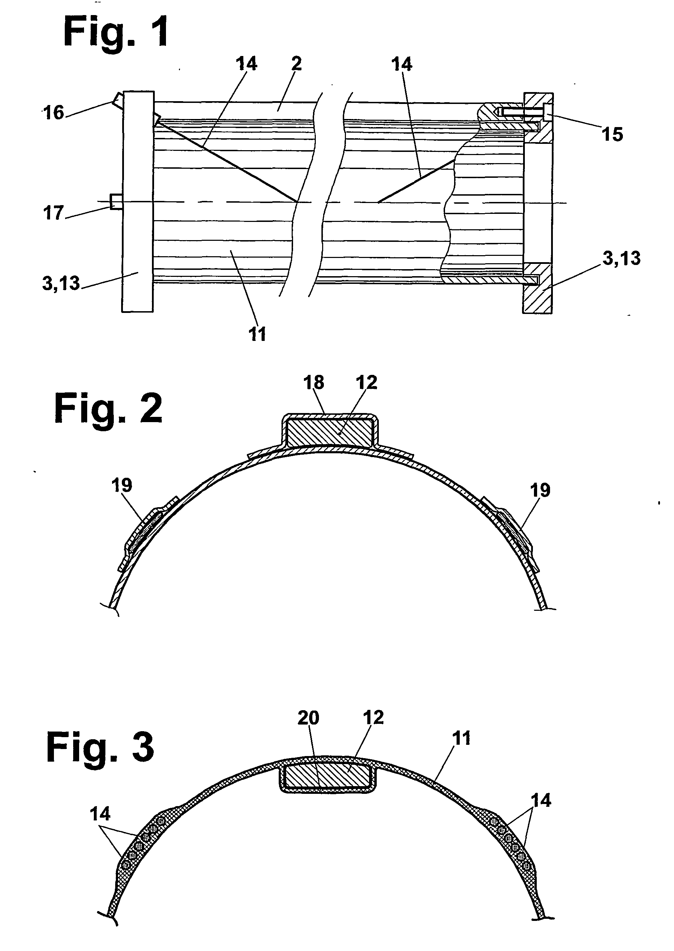

Fig. 1 ist eine - verkürzte - Draufsicht auf ein Bauelement gemäss der vorliegenden Erfindung, teilweise im Schnitt. Ein Hohlkörper 11, beispielsweise zylindrischer Form, besteht aus einem formstabilen Rohr und ist mit zwei Flanschen 13 fluiddicht verbunden, beispielsweise durch Schweissen, Kleben, Eingiessen. Formstabil bedeutet im hier verstandenen Sinne, dass das Rohr im leeren Zustande unter dem Einfluss des Eigengewichtes keine wesentliche Verformung erfährt. Der Begriff der Formstabilität steht also im Gegensatz zu jenem der Flexibilität.

Sofern die Lastseite des erfindungsgemässen pneumatischen Bauelementes die in Fig. 2 die obere ist, ist auf dieser Seite des Hohlkörpers 11 ein Druckstab 2 angebracht, welcher kraftschlüssig mit den beiden Flanschen 13 verbunden ist, beispielsweise mittels Schrauben 15 (nur eine dargestellt). Ebenfalls mit den Flanschen 13 kraftschlüssig verbunden sind zwei Zugbänder 14, welche im gegenläufigen Schraubungssinne um den Hohlkörper 11 herumgelegt und mittels Spannvorrichtungen 16 (nur eine davon sichtbar) gespannt werden können. Das hier als Flansch 13 ausgebildete Bauteil ist funktional ein sog. Knotenelement 3, in welchem die Vektorsumme von Auflagekraft, Druckkraft von den Druckstäben 2 und Zugkräften von den Zugbändern 14 ohne Erzeugung von Biegeelementen verschwindet. Ein solches Knotenelement 3 kann selbstverständlich anders ausgeführt sein, solange die genannten Bedingungen hiefür erfüllt sind.

Ein Ventil 17 dient zum Druckbeaufschlagen des Hohlkörpers 11 mit einem geeigneten Druckmittel. Als Druckmittel kommt vorzugsweise Luft in Frage, jedoch sind auch Flüssigkeiten, hauptsächlich Wasser - allenfalls mit einem Frostschutze versetzt - in gewissen Anwendungen möglich, fallweise sogar vorzuziehen.

Mit der Formstabilität des Hohlkörpers 11 geht einher eine kleinere Nachgiebigkeit bei Druckbeaufschlagung, allenfalls auch eine höhere Druckfestigkeit des so gebauten pneumatischen Bauelementes. Damit - als einer der Einflussgrössen - kann das optimale Verhältnis von Länge zu Druckmesser über den Wert von

$$\frac{L}{D} \approx 20$$

nennenswert gesteigert werden gegenüber bei der Verwendung von flexiblen Materialien für den Hohlkörper.

Die Flanschen 13 werden vorzugsweise aus dem gleichen Material gefertigt, wie der Hohlkörper 11, alternativ jedoch aus einem Material mit im Wesentlichen gleichen thermischen Ausdehnungskoeffizienten. Die Flanschen 13 übernehmen im Ausführungsbeispiel gemäss Fig. 1 einerseits die Aufgabe des Verschlusses des Hohlkörpers 11 - also die Dichtfunktion - anderseits diejenige der Knotenelemente 3, in welchen die Vektorsumme von Auflagekraft, Druckkraft des Druckstabes 2 und Zugkräfte der Zugbänder 14 momentenfrei zu Null gebracht werden kann. Zur Optimierung der mechanischen Eigenschaften bei höheren Drucken können die Flanschen 13 selbstverständlich entsprechend gewölbt hergestellt sein.

Weitere Vorteile der Verwendung formstabiler Hohlkörper 11 sind an Hand der Fig. 2 erläutert.

In Fig. 2 ist ein Querschnitt durch ein detailliertes erstes Ausführungsbeispiel eines pneumatischen Bauelementes dargestellt. Der Hohlkörper 11 besteht beispielsweise aus einem dünnwandigen Metallrohr. Aufgesetzt und mit dem Hohlkörper 11 beispielsweise durch Schweissen verbunden ist ein U-förmiges Profil 18, welches die Lage des Druckstabes 2 mit kleiner Toleranz in seinen Querdimensionen definiert.

Die Zugbänder 14 - beispielsweise aus hochfestem textilem Material wie Aramidfasern, sind ebenfalls durch flache U-Profile 19 geführt, entweder auf ihrer ganzen Länge oder nur abschnittsweise, womit die U-Profile 19 nur als Laschen ausgebildet sind.

Im zweiten Ausführungsbeispiel gemäss Fig. 3 ist der Hohlkörper 11 beispielsweise aus faserarmiertem Kunststoff extrudiert. Koextrudiert ist ebenfalls der in diesem Ausführungsbeispiel im Innern des Hohlkörpers 11 angebrachte Druckstab 2. Bewirkt durch das Verfahren der Koextrusion ist die Führungsgenauigkeit des Druckstabs 2 sehr hoch, da er ohne Spiel in einer Führung 20 liegt.

Entweder ebenfalls koextrudiert oder nachträglich aufgebracht sind die Zugbänder 14 in Form von beispielsweise Stahlkabeln. Diese sind - wie aus der Vorspanntechnik bekannt - in Hüllen eingeschlossen, innerhalb welcher sie virtuell beweglich sind und, ohne Längskräfte auf den Hohlkörper 11 zu übertragen, gespannt werden können. Als Materialien für die Fertigung des Hohlkörpers 11 kommen also in Frage dünnwandige Rohre aus Metall im Wandstärkenbereich von 0.1 bis 3.0 mm, Faserverbundwerkstoffe wie GFK und CFK ferner transluzide Kunststoffe genügender Festigkeit, wie beispielsweise Polykarbonate.

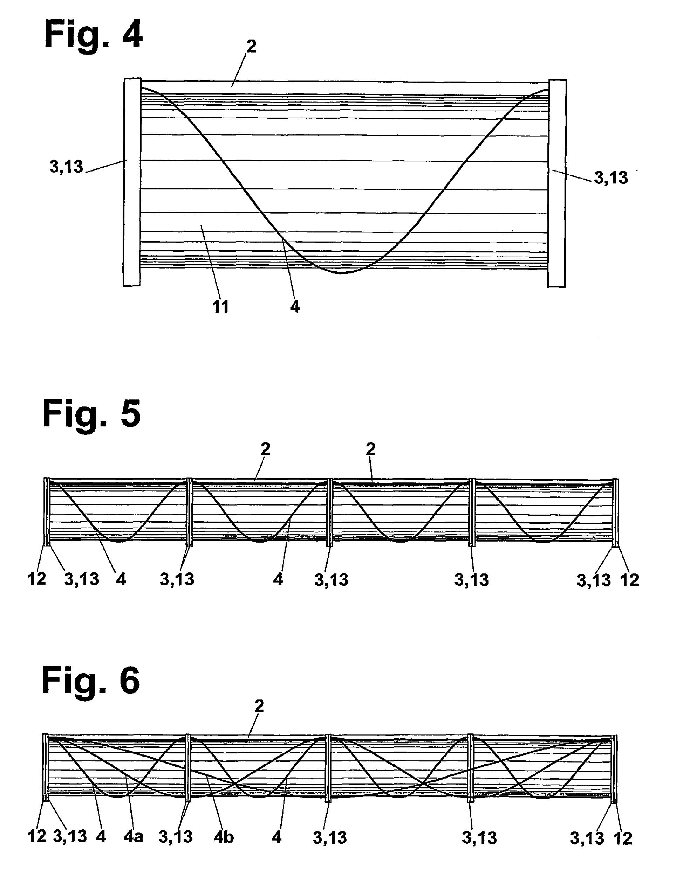

Die Fig. 4 bis 7 sind Darstellungen von Ausführungsbeispielen längerer Hohlkörper 11. Hier kann es von Vorteil sein, für die Hohlkörper 11 einen modularen Aufbau vorzusehen. Ein solches Modul ist in Fig. 4 dargestellt. Es besteht aus einem leeren, jedoch formstabilen Hohlkörper 11 mit bereits vormontierten oder in der Herstellung bereits integrierten Zugbändern 4. Der Druckstab 2 ist ebenfalls bereits montiert oder eingebaut. Die Flansche 13 sind als Knotenelemente ausgebildet. Zum Aufbau eines eigentlichen und erfindungsgemässen pneumatischen Bauelementes kann nun eine Vielzahl von solchen Modulen aneinandergebaut werden, wie in Fig. 5 gezeigt, dergestalt, dass ein Modul ein ganzzahliger Teil der gesamten Länge des modular aufgebauten pneumatischen Bauelementes ist.

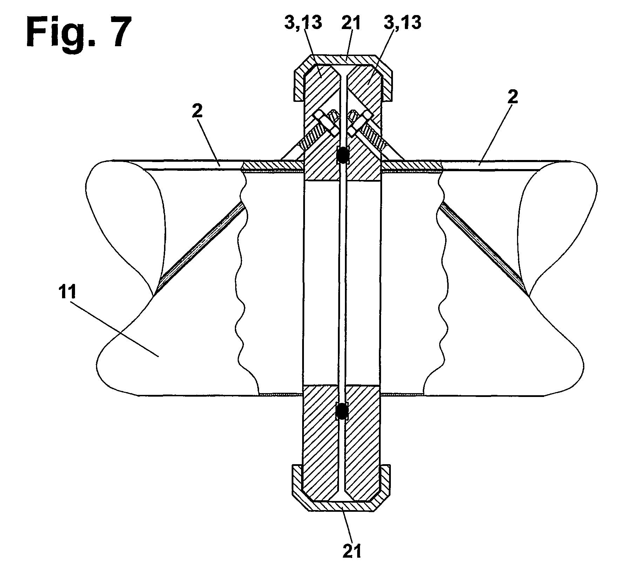

Die zwei zuäusserst liegenden Module sind mit Abschluss-Flanschen 12 versehen, welche Dichtungsmittel, wie z.B. O-Ringe, enthalten. Ebenso sind zwischen jeweils zwei benachbarte Flansche 13 solche Dichtungsmittel eingefügt. Die Ausgestaltung der Flansche 13 als Knotenelemente ist beispielsweise aus CH 1042/02 bekannt, ebenso jene als Abschluss-Flansche 12. Bei langen Hohlkörpern 11 kann es angezeigt sein, die Anzahl von Zugbändern zu vergrössern und deren Knotenpunkte zu verändern, wie in Fig. 5 gezeigt. Hier sind weitere Paare von Zugbändern 4a, 4b eingefügt, deren Verankerung bereits zu Fig. 1 beschrieben ist. Damit die Kraftflüsse durch die Flansche 12 nicht unterbrochen werden, bzw. nicht zu unerwünschten Biegemomenten führen, können die Flansche 12 beispielsweise durch sog. V-Ringe 21 oder sonst geeignete Laschen umreift werden, wie in Fig. 7 im Sinne eines Beispiels im Längsschnitt gezeigt.

## Patentansprüche

1. Pneumatisches Bauelement bestehend aus einem druckmittelbeaufschlagbaren langgestreckten Hohlkörper (11), je einem an jedem Ende des Hohlkörpers (11) angeordneten Knotenelement (3), mindestens einem Paar von Zugbändern (14), welche in gegenläufigem Schraubungssinne mindestens je einmal um den Hohlkörper (11) herumgelegt und gespannt sind, und mindestens einem entlang je einer Mantellinie des Hohlkörpers (11) verlaufenden Druckstab (2), **dadurch gekennzeichnet, dass** der Hohlkörper (11) aus formstabilem Material gefertigt ist, welches im leeren Zustand des Hohlkörpers (11) durch den Einfluss der Schwerkraft keine wesentlichen Formänderungen erfährt.

2. Pneumatisches Bauelement nach Patentanspruch 1, **dadurch gekennzeichnet, dass** das Druckmittel gasförmig ist.

3. Pneumatisches Bauelement nach Patentanspruch 1, **dadurch gekennzeichnet, dass** das Druckmittel flüssig ist.

4. Pneumatisches Bauelement nach Patentanspruch 1, **dadurch gekennzeichnet, dass** der Hohlkörper (11) aus einem Metallrohr gefertigt ist mit einer Wandstärke zwischen 0.1 und 3.0 mm.

5. Pneumatisches Bauelement nach Patentanspruch 1, **dadurch gekennzeichnet, dass** der Hohlkörper (11) aus einem Rohr aus Polykarbonat gefertigt ist.

6. Pneumatisches Bauelement nach Patentanspruch 1, **dadurch gekennzeichnet, dass** der Hohlkörper (11) aus einem Rohr aus Faserverbundwerkstoff gefertigt ist.

7. Pneumatisches Bauelement nach Patentanspruch 1, **dadurch gekennzeichnet, dass** der Hohlkörper (11), der Druckstab (4) und die Zugbänder (14) modular aufgebaut sind.

8. Pneumatisches Bauelement nach Patentanspruch 7, **dadurch gekennzeichnet, dass** ein Modul aus einem ganzzahligen Teil der Länge des pneumatischen Bauelementes besteht.

9. Pneumatisches Bauelement nach Patentanspruch 7, **dadurch gekennzeichnet, dass** sich mindestens zwei der Zugbänder (14) über die gesamte Länge des modular aufgebauten pneumatischen Bauelementes erstrecken.

**Claims**

1. A pneumatic component consisting of an elongated hollow body (11) into which pressure means can be admitted, a node element each (3) arranged on each end of the hollow body (11), at least one pair of straps (14), which in opposite screw direction are each placed once about the hollow body (11) and tensioned, and at least one compression rod (2) each running along a surface line of the hollow body (11), **characterized in that** the hollow body (11) is manufactured of a shape-retaining material, which in the empty state of the hollow body (11) through the effect of the gravity is not subjected to any substantial changes in shape.

2. The pneumatic component according to Patent Claim 1, **characterized in that** the pressure means is gaseous.

3. The pneumatic component according to Patent Claim 1, **characterized in that** the pressure means is liquid.

4. The pneumatic component according to Patent Claim 1, **characterized in that** the hollow body (11) is manufactured of a metal tube with a wall thickness between 0.1 and 3.0 mm.

5. The pneumatic component according to Patent Claim 1, **characterized in that** the hollow body (11) is manufactured of a tube of polycarbonate.

6. The pneumatic component according to Patent Claim 1, **characterized in that** the hollow body (11) is manufactured of a tube of composite fibre material.

7. The pneumatic component according to Patent Claim 1, **characterized in that** the hollow body (11), the compression rod (4) and the straps (14) are of a modular construction.

8. The pneumatic component according to Patent Claim 7, **characterized in that** a module consists of a whole-number part of the length of the pneumatic component.

9. The pneumatic component according to Patent Claim 7, **characterized in that** at least two of the straps (14) extend over the entire length of the pneumatic component of modular construction.

**Revendications**

1. Elément de construction mécanique se composant d'un corps creux (11) étiré en longueur pouvant être alimenté en fluide comprimé, un élément nodal (3) respectif sur chaque extrémité du corps creux (11), au moins une paire de tirants (14), lesquels sont entourés et contraints au moins respectivement une fois autour du corps creux (11) dans le sens contraire de vissage, et au moins une barre travaillant à la compression (2) s'étendant le long de chaque génératrice du corps creux (11), **caractérisé en que** le corps creux (11) est fabriqué dans un matériau indéformable, lequel ne subit en l'état vide du corps creux (11) aucune modification de forme essentielle de par l'influence de la pesanteur.

2. Elément de construction mécanique selon la revendication 1, **caractérisé en ce que** le fluide de pression est gazeux.

3. Elément de construction mécanique selon la revendication 1, **caractérisé en ce que** le fluide de pression est liquide.

4. Elément de construction mécanique selon la revendication 1, **caractérisé en ce que** le corps creux (11) est fabriqué dans un tube métallique avec une épaisseur de paroi située entre 0,1 et 3 mm.

5. Elément de construction mécanique selon la revendication 1, **caractérisé en ce que** le corps creux (11) est fabriqué dans un tube de polycarbonate.

6. Elément de construction mécanique selon la revendication 1, **caractérisé en ce que** le corps creux (11) est fabriqué dans un tube de matériau renforcé par fibres.

7. Elément de construction mécanique selon la revendication 1, **caractérisé en ce que** le corps creux (11), la barre travaillant à la compression (2) et les tirants (14) sont montés de manière modulaire.

8. Elément de construction mécanique selon la revendication 7, **caractérisé en ce qu'**un module est composé d'une partie en nombres entiers de la longueur de l'élément de construction pneumatique.

**9.** Elément de construction mécanique selon la revendication 7, **caractérisé en ce qu'**au moins deux des tirants (14) s'étendent sur toute la longueur de l'élément de construction pneumatique monté de manière modulaire.

# Fig. 1

# Fig. 2

# Fig. 3

# Fig. 4

# Fig. 5

# Fig. 6

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0173245 A
- CH 104202